# EUROPEAN PATENT SPECIFICATION

(11) **EP 0 293 422 B1**
(45) Date of publication and mention of the grant of the patent: **31.08.1994**
(21) Application number: 87907914.3
(22) Date of filing: 25.11.1987
(51) Int. Cl.: B65G 67/08, B65G 67/20

(54) **Means and method for loading packaged particulate materials**
Vorrichtung und Verfahren zum Laden von verpacktem Teilchenmaterial
Dispositif et procédé pour le chargement de matériaux en grains emballés

(30) Priority: 25.11.1986 AU 9150/86; 19.01.1987 AU 9922/87
(43) Date of publication of application: 07.12.1988
(73) Proprietor: BROWNTREE TRADING COMPANY PROPRIETARY LIMITED, Adelaide, S.A. 5000 (AU)
(72) Inventor: TRELOAR, Norman, Myer, Stirling, S.A. 5152 (AU)
(74) Representative: Robinson, Anthony John Metcalf
(86) International application number: PCT/AU87/00395
(87) International publication number: WO 88/03907

(56) References cited:
- EP-A- 0 049 826
- DE-A- 3 118 803
- DE-B- 1 076 563
- US-A- 2 812 052
- US-A- 3 885 682

## Description

This invention relates to a loading conveyor and to a method of loading material into a container using the conveyor.

The problem to which this invention is directed is the loading of containers insofar that there is advantage in packing as many goods as is possible into the space of a container.

The type of container referred to is that which is now being typically used for shipping purposes around the world and which is of rectangular proportions and is accessible from one end for loading purposes.

With present equipment, if the container is to be loaded from the floor to ceiling, each package, typically a bag of wheat, will have to be taken from a delivery elevator which has a fixed position and then "lumped" into a stacked position.

Particular difficulty arises when the bag is to be located close to, or in fact adjacent, a ceiling where an individual can find great difficulty shifting a bag equivalent to a weight of perhaps 100 kilograms into such a confined space from one end only.

The difficulty is self-evident and in practice it is time consuming and therefore expensive to achieve a fully packed container. Many containers are therefore not fully filled with resultant waste space for transport purposes.

There is described in EP-A2-0 049 826 a load storage station intended for operation inside a storehouse or ship hold but this does not meet the requirements for loading containers. The said specification describes a load storage station for stowing ships and including a mobile rectangular platform on which a carriage is movable and a parking stage which is rotatably mounted on the carriage. The parking stage has a working surface onto which articles to be stowed in the ship can be deposited by crane and on which operators stand. A first conveyor belt is mounted on a first frame which is pivoted adjacent one end to the parking stage for inclination about a horizontal axis so that articles can be placed by the operators on the conveyor adjacent the said end and conveyed to the outer end of the conveyor. The first frame has telescoped within it a second frame on which is mounted a second conveyor belt which receives articles from the first conveyor belt for delivery to the outer end of the second conveyor. The rear end of the first conveyor belt on to which the articles are manually deposited by the operators on the platform is located ahead of the vertical axis of rotation of the parking stage on the carriage. This apparatus is necessarily massive since the whole of the conveyor belts are located on one side of the vertical axis at all times and for the same reason the overall length of the apparatus is very considerable, adjustment to the outreach of the device being achieved by telescoping the second frame relative to the first. In addition, much manual labour is involved since articles to be stowed are first deposited by crane on the platform and then manhandled on to the first conveyor.

According to the first aspect of the present invention, a loading conveyor includes a base, a first support frame which is mounted on the base by means allowing rotation of the support frame about a substantially vertical axis and by means allowing for change of inclination of the support frame about a substantially horizontal axis, a belt support frame mounted on the first support frame for movement in a forward to aft direction thereon, the belt support frame having end rollers on which runs an endless conveyor belt, drive motor means connected to the conveyor belt and adapted to operate at a speed such that material leaving the conveyor belt is thrown from the forward end of the conveyor, and a serving conveyor separately operable to load material on to the conveyor belt at about the location of the substantially vertical axis.

By reasons of the arrangement of the serving conveyor loading material on to the conveyor belt at about the location of the substantially vertical axis manhandling of material to be loaded is avoided while permitting the conveyor to be rotated, retracted and advanced, and adjusted in inclination. Moreover, the motor means can operate to throw material from the forward end of the conveyor. Thus, according to a second aspect of the invention, a method of loading material into a container using a loading apparatus according to the first aspect is characterised by depositing material on the conveyor belt near the said vertical axis and by accelerating material on the endless conveyor belt to increase the speed of the material so the material is thrown from the forward end into the container.

It should be mentioned that there is described in US-A-3 885 682 a mail bag handling apparatus comprising a main elongate wheeled conveyor having a front wheel assembly which is provided with powered traction wheels and which is entered into a vehicle. The main conveyor mounts at its forward end cantilever fashion a short belt conveyor whose angle of elevation relative to the main conveyor can be adjusted by power means. It is said that for bagged mail only the short belt can be driven at a speed to project or propel the bags into loaded position in the vehicle but a lower speed is to be used for cartoned goods. This apparatus is of very different construction from the present invention.

It will be understood that the loading conveyor can be operated at such a speed that the material will leave the conveyor with a significant horizontal component of trajectory.

This can be achieved with packaged materials of larger weight by providing that there is a separate serving conveyor which will load a package as required from time to time onto the loading conveyor which can then rapidly accelerate the package so that it will shoot at substantial speed from the end of the conveyor.

The actual speed to which the materials should be accelerated will be dependent entirely upon the loading situation, that is, whether the package, such as a bag of wheat, is to be located with a tight fit in an uppermost corner position in which it is to be tightly jammed, or it is to be located simply on the floor as a first of a row or stack of bags.

Each position can be achieved by different speeds but speeds in the order of three to four metres per second as an exit speed will indicate the extent to which an end velocity is required.

In preference, the loading conveyor is supported so as to be rotatable for its slewing direction about a substantially vertical axis and the serving conveyor is adapted to drop the material or package on the loading conveyor in the vicinity of such vertical pivot axis.

In this way, location of the package is most easily achieved for consistently feeding in a proper position onto the loading conveyor.

In preference, the loading conveyor and the associated equipment are supported by a base such that the tray of a truck can pass there beneath.

With bags of particulate material being directed at very great speed into the container, it has been found necessary to provide that there is indeed a workman within the container locating such bags from time to time after being thrust from the loading conveyor.

The danger of such machinery and such high weight bags being directed at high velocity within a very confined space is self-evident, and it is a feature that the loading conveyor has at or toward its end control means connected to control the drive means associated with the conveyor.

In preference, such control means include means to effect a rapid stopping of the conveyor belt of the loading conveyor.

Other features and improvements will be better seen when reference is made to the now following description of a preferred embodiment and to the claims appended to this specification.

Accordingly, a description will now be given of the third embodiment with the assistance of drawings in which -
- FIG. 1: is a side elevation showing in partly schematic and cutaway form a serving conveyor servicing a loading conveyor partly located within a container;
- FIG. 2: is a plan view of the arrangement substantially as shown in Fig. 1 except that there is included an operator's seat and control panel;
- FIG. 3: is a perspective view showing with further added parts the loading conveyor and serving conveyor;

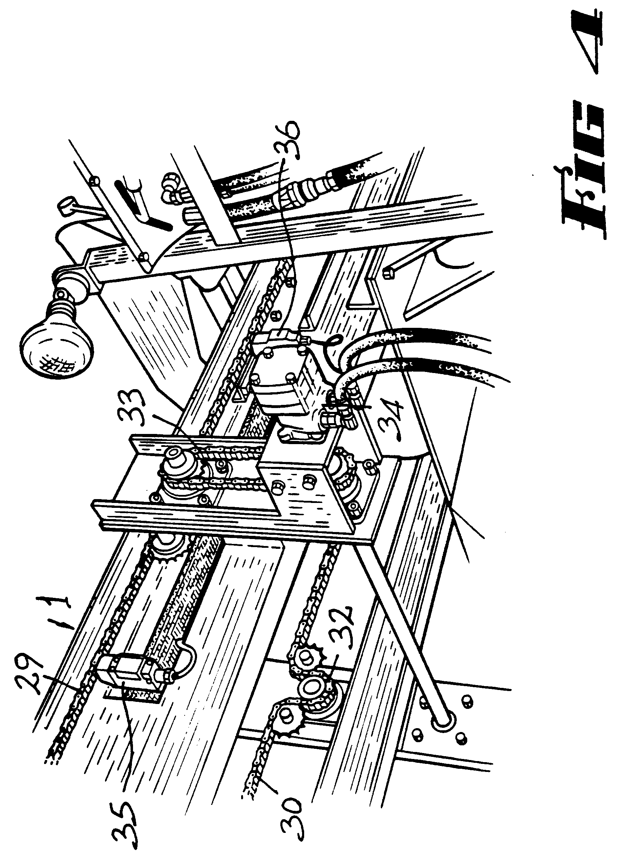

- FIG. 4: is a perspective view of the drive assembly for forward to aft position control of the loading conveyor;
- FIG. 5: is an underneath perspective view of the arrangement as shown in Fig. 3, especially showing the slewing control ram and the tilting control rams; and

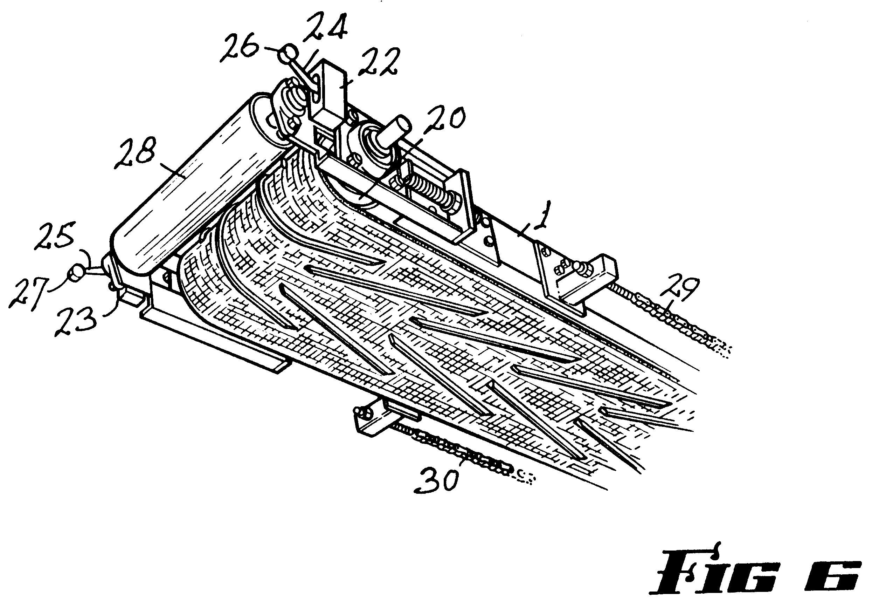

- FIG. 6: is an underneath view of the outermost end of the loading conveyor showing in particular the outermost control means at both sides of an end roller.

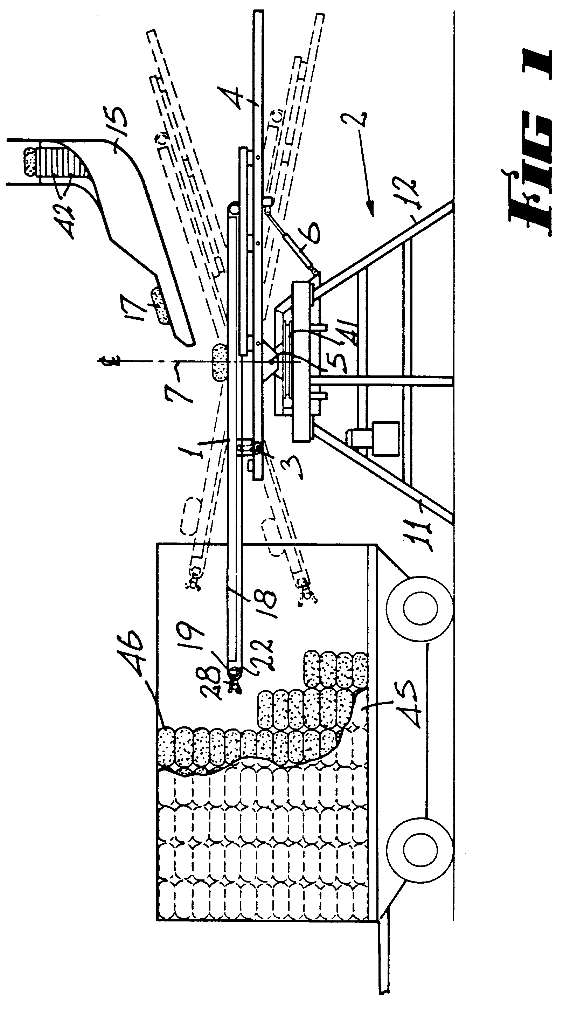

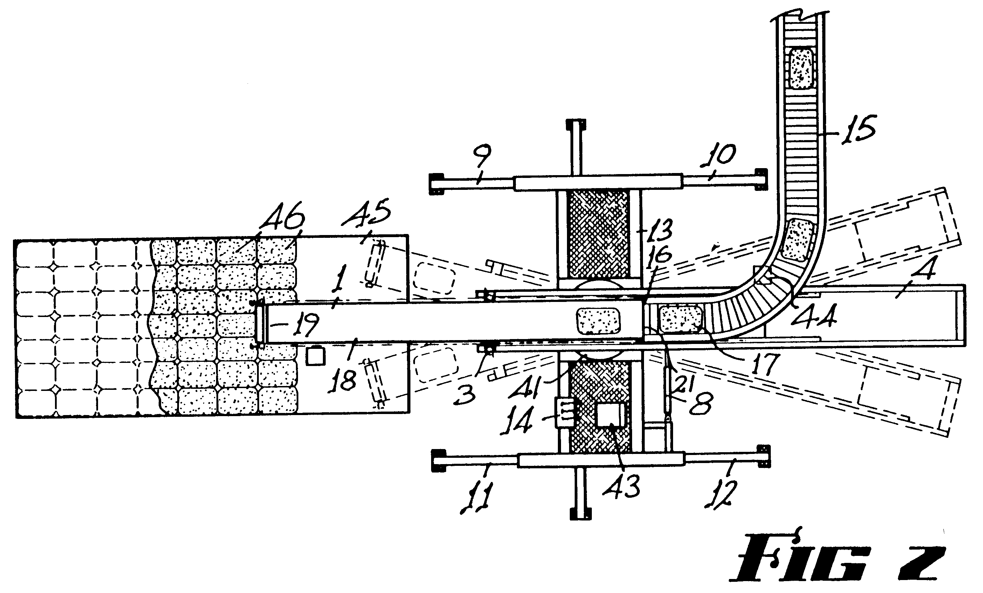

Referring in detail to the drawings, and once again noting that Figs. 1 and 2 are schematic, and that Fig. 2 has some added detail which is not shown in Fig. 1, there is shown a loading conveyor 1 which is supported on a base 2 in such a way that it can move both in a forward to aft direction which can be controlled by hydraulic motor 3, with respect to a support frame 4, which can be tilted about pivot axis 5 under the control of tilt rams 6 and which can be slewed by being pivotal around the vertical axis 7 under the control of slew ram 8.

The base 2 is comprised of a frame which comprises side legs 9 and 10 on one side and 11 and 12 on the other such that the tray of a semi-trailer type vehicle can pass therebetween and indeed beneath the control platform 13.

The control platform 13 includes a control panel 14 with the appropriate hydraulic controls to control the relative positioning of the loading conveyor, the speed of the conveyor and the drive of the serving conveyor 15.

The serving conveyor 15 rises from a side and then turns and indeed has an end 16 which is adapted to place a package of material such as at 17 by locating this at about the position of the pivot axis 7 so that the package is best positioned for acceleration by the loading conveyor 1.

The serving conveyor 15 is adapted to be stopped or started independently of the loading conveyor 1 so that packages of material can be fed one at a time onto the loading conveyor 1 to effect a rapid acceleration to the outer end of the loading conveyor 1.

The loading conveyor 1 includes a continuous belt 18 which extends to an outer end 19 where it extends around roller 20 and at an inner end or aft, as compared to forward, roller 21 where it extends around and is driven by motor 44.

At the forward or outer end of the loading conveyor 1 are control means 22 and 23 which incorporate electrical switches which are operable by movement against resilient spring pressure of arm 24 in the one case and 25 in the other.

The position of the respective arms 24 and 25 with an outer end comprising a knob 26 in the one case and 27 in the other, are such that if either of these contact against the side of a container or are pushed by an operator within the container, there is effected through an electrical cable, a stop signal which then requires a reset action by the operator for restarting the drive motor 44 or rams 6 or 8.

In this way it is found that there is indeed greater safety for the operator within the container.

There is an outermost roller 28 which is adapted to provide for support of the end of a bag of material, such as a bag of wheat, as this is projected past the end of the belt.

The loading conveyor 1 is adapted to be operated so that it has a lateral belt speed over a variable range of speeds, but such that it has sufficient torque to accelerate a bag of wheat which would be of 100 kilograms of weight to a speed such that the exiting speed of the end of the conveyor over the length shown is four metres per second.

Such a speed will ensure that the bag continues after leaving the conveyor end so that it will not drop more than twice its thickness after having travelled twice its length.

As has been said, however, the speed can be varied for appropriate conditions.

Returning to the construction of the apparatus, the position of the loading conveyor 1 is controllable in a forward to aft direction and this is achieved by two chains 29 and 30 being engaged by sprockets such as at 31 and 32 which in turn are driven through chain 33 by hydraulic motor 34.

Limit switches 35 and 36 operate to limit the extent of forward to aft movement as determined by cams fixed to the chain 29.

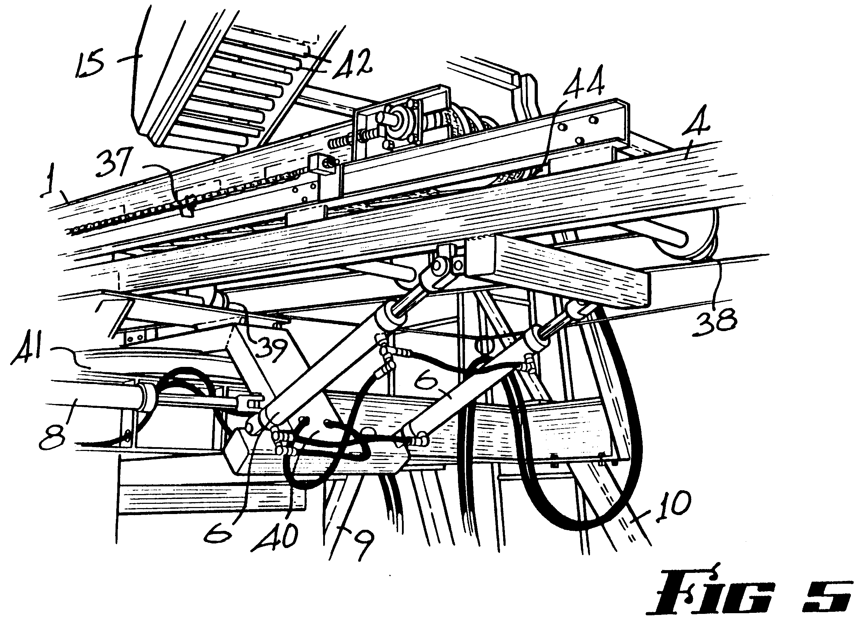

Such a cam is shown in Fig. 5 at 37.

The loading conveyor 1 is separately supportable on the support frame 4 in such a way that this can be moved forwardly and rearwardly and this is achieved by supporting of this on wheels such as those shown in Fig. 5 at 38 and 39.

The support frame 4 includes an outwardly extending arm 40 to which are secured the tilt rams 6 which can therefore follow rotation with the loading conveyor 1.

Rotation about a substantially vertical axis is achieved by supporting the whole assembly on a turntable 41.

The serving conveyor 15 is operated by having a plurality of rollers shown typically at 42 each of which are commonly coupled through a chain drive which is not shown but which is within a cowling on the side of the conveyor so that these are in fact driven under the control of a drive motor and, of course, are therefore separately controllable by the operator.

There is provided a seat 43 for an operator so that the operator can sit substantially aligned with the elevator and therefore essentially aim the loading conveyor 1 in the right direction for the next bag to be located.

Using apparatus of this type has significantly reduced the time that has been hitherto necessary to load a container such as is shown at 45, and furthermore a container thus loaded can be loaded fully and tightly packed with packages 46 so that the best volume weight ratio can be achieved where appropriate.

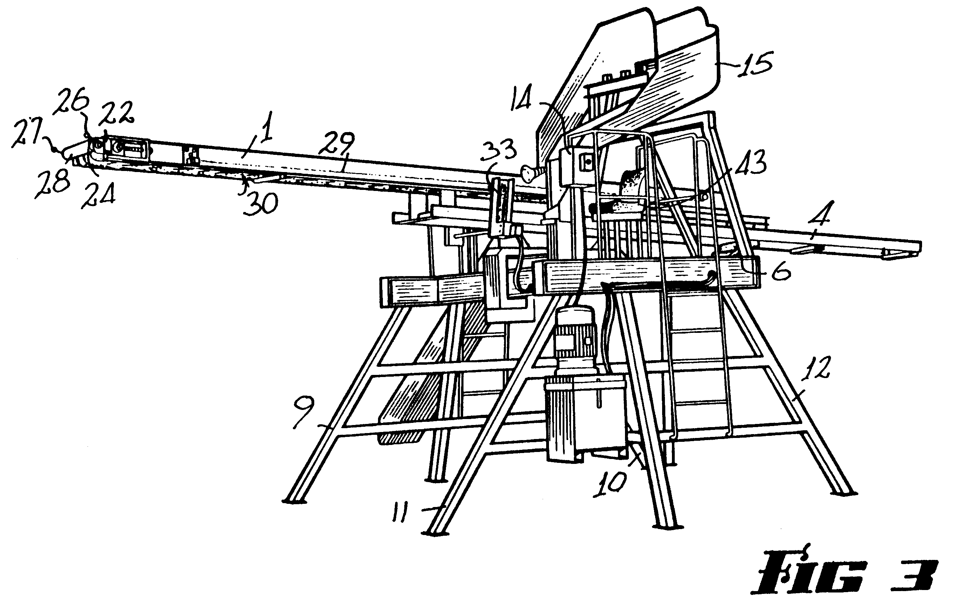

This then describes the preferred embodiment which has been described firstly in respect of schematic drawings and then more detailed drawings from Figs. 3 through to 6.

While reference has been made to the loading of packaged materials, and we have in mind particularly bags of wheat or barley or other cereals, it is clear that the application applies to a large number of materials and can also include the case where the materials are unpackaged.

In this case a loading conveyor supported in the same way as described in the embodiment is however shaped so as to retain a concave cross-sectional shape along its length, and in this manner unpackaged material such as unpackaged wheat or barley or peas can therefore be fed into this, once again at an appropriate location along its length, and accelerated into a confined are a within a container or some such device.

Once again, the speed of acceleration is appropriate for the particular materials and the application desired.

In a further alternate arrangement, there are proposed means by which there are automatic control means for locating and aligning the loading conveyor.

Accordingly, there are proposed computer means controlling the forward to aft drive motor, the tilt and slewing rams and belt speed such that there are provided a sequential positioning of the loading conveyor in accord with such a program.

Necessarily such a program will require means to establish a reference position of the end of the conveyor and in such an instance, the control means that have been used to provide a stopping of the conveyor belt can be used, and indeed are used, in such a way as to locate the end of the conveyor against first a one side of the container and then another, whereafter the conveyor will be controlled by the program with these two references controlling the positioning.

The serving conveyor can be appropriately coupled to such a program so as to only load a bag or other material onto the loading conveyor as appropriate.

## Claims

1. A loading conveyor including a base (2), a first support frame (4) which is mounted on the base (2) by means (41) allowing rotation of the support frame (4) about a substantially vertical axis (7) and by means (5,6) allowing for change of inclination of the support frame (4) about a substantially horizontal axis, a belt support frame (1) mounted on the first support frame (4) for movement in a forward to aft direction thereon, the belt support frame having end rollers (20,21) on which runs an endless conveyor belt (18), drive motor means (34) connected to the conveyor belt (18) and adapted to operate at a speed such that material leaving the conveyor belt (18) is thrown from the forward end of the conveyor, and a serving conveyor (15) separately operable to load material onto the conveyor belt at about the location of the substantially vertical axis.

2. A loading conveyor according to claim 1 in which the drive motor means (34) is adapted to cause the conveyor belt (18) to reach a speed of at least four metres per second.

3. A loading conveyor according to claim 1 in which the motor drive means (34) is adapted to drive the conveyor belt (18) at a sufficiently great velocity that a 100 kg. bag of wheat having a given bag length and thickness carried on the conveyor is thrown from the forward end of the conveyor at a forward velocity that after travelling two bag-lengths forwardly of the forward end of the conveyor, has dropped no more than two bag thicknesses.

4. A loading conveyor according to any of claims 1 to 3 which includes means (22-27) for rapid control of the speed of the motor means (34) and therefore of the speed of the conveyor belt (18).

5. A loading conveyor according to any of claims 1 to 3 which includes control means (22-27) at the forward end of the loading conveyor (18) effective to stop the drive of the conveyor belt upon separate contact.

6. A loading conveyor according to any of claims 1 to 5 in which the base is comprised of a frame which comprises side legs (9-12) supporting a control platform leaving thereby an access area therebeneath for passage therethrough of a motor vehicle tray top.

7. A method of loading material into a container using a loading conveyor according to claim 1 characterised by depositing material on the conveyor belt (18) near the said vertical axis (7) and by accelerating material on the endless conveyor belt (18) to increase the speed of the material so the material is thrown from the forward end into the container.

8. A method according to claim 7 wherein the material is a bag of wheat and the vertical component of the trajectory is such that the bag after travelling two bag-lengths forwardly of the forward end of the conveyor has not dropped more than two bag thicknesses.

9. A method according to claim 7 or claim 8 wherein the endless conveyor belt (18) moves at a rate substantially greater than the rate of a serving conveyor (15) depositing material on the endless conveyor belt (18)

## Patentansprüche

1. Beladungsfördereinrichtung, umfassend ein Grundgestell (2), einen ersten Tragrahmen (4), der durch Mittel (41), welche eine Drehung des Tragrahmens (4) um eine im wesentlichen vertikale Achse (7) ermöglichen, und durch Mittel (5, 6), welche eine Änderung der Neigung des Tragrahmens (4) um eine im wesentlichen horizontale Achse ermöglichen, auf dem Grundgestell (2) befestigt ist, einen Bandtragrahmen (1), der auf dem ersten Tragrahmen (4) so befestigt ist, daß er auf diesem von vorne nach hinten bewegt werden kann, wobei der Bandtragrahmen Endrollen (20, 21) aufweist, über die ein Endlos-Förderband (18) läuft, Antriebsmotormittel (34), die mit dem Förderband (18) verbunden sind und dafür eingerichtet sind, mit einer solchen Geschwindigkeit zu arbeiten, daß Material, welches das Förderband (18) verlaßt, vom vorderen Ende des Förderers geschleudert wird, und einen Beschickungsförderer (15), der getrennt betrieben werden kann, um ungefähr an dem Ort der im wesentlichen vertikalen Achse Material auf das Förderband zu laden.

2. Beladungsfördereinrichtung nach Anspruch 1, bei dem die Antriebsmotormittel (34) dafür eingerichtet sind, zu bewirken, daß das Förderband (18) eine Geschwindigkeit von mindestens vier Metern pro Sekunde erreicht.

3. Beladungsfördereinrichtung nach Anspruch 1, bei dem die Motorantriebsmittel (34) dafür eingerichtet sind, das Förderband (18) mit einer ausreichend großen Geschwindigkeit anzutreiben, um einen auf dem Förderer getragenen 100-kg-Sack Getreide, der eine bestimmte Sacklänge und -dicke besitzt, von dem vorderen Ende des Förderers mit einer solchen Vorwärtsgeschwindigkeit zu schleudern, daß dieser, nachdem er vom vorderen Ende des Förderers zwei Sacklängen nach vorne zurückgelegt hat, nicht mehr als zwei Sackdicken nach unten gefallen ist.

4. Beladungsfördereinrichtung nach irgendeinem der Ansprüche 1 bis 3, der Mittel (22-27) zur schnellen Steuerung der Geschwindigkeit der Motormittel (34) und damit der Geschwindigkeit des Förderbandes (18) umfaßt.

5. Beladungsfördereinrichtung nach irgendeinem der Ansprüche 1 bis 3, der am vorderen Ende des Verladebandes (18) Steuermittel (22-27) umfaßt, die auf eine separate Berührung hin ein Anhalten des Förderbandes bewirken.

6. Beladungsfördereinrichtung nach irgendeinem der Ansprüche 1 bis 5, bei dem das Grundgestell aus einem Rahmen besteht, welcher seitliche Beine (9-12) umfaßt, die eine Steuerplattform tragen, wobei sie darunter einen Zugangsbereich für die Durchfahrt einer Verladefläche eines Kraftfahrzeugs freilassen.

7. Verfahren zum Verladen von Material in einen Container unter Verwendung einer Beladungsfördereinrichtung nach Anspruch 1, gekennzeichnet durch das Ablegen von Material auf dem Förderband (18) nahe der genannten vertikalen Achse (7) und durch die Beschleunigung des Materials auf dem Endlos-Förderband (18), um die Geschwindigkeit des Materials zu erhöhen, so daß das Material von dem vorderen Ende aus in den Container geschleudert wird.

8. Verfahren nach Anspruch 7, worin das Material ein Sack Weizen ist und die vertikale Komponente der Bahn derart ist, daß der Sack, nachdem er vom vorderen Ende des Förderers zwei Sacklängen nach vorne zurückgelegt hat, nicht mehr als zwei Sackdicken nach unten gefallen ist.

9. Verfahren nach Anspruch 7 oder Anspruch 8, worin sich das Endlos-Förderband (18) mit einer Geschwindigkeit bewegt, die deutlich größer ist als die Geschwindigkeit eines Beschickungsförderers (15), welcher Material auf dem Endlos-Förderband (18) ablegt.

## Revendications

1. Convoyeur de chargement comportant une base (2), un premier châssis (4) de support qui est monté sur la base (2) par l'intermédiaire de moyens (41) permettant une rotation du châssis (4) de support autour d'un axe (7) à peu près vertical et de moyens (5, 6) permettant de changer l'inclinaison du châssis (4) de support autour d'un axe à peu près horizontal, un châssis (1) de support de bande monté sur le premier châssis (4) de support pour avoir un déplacement dans la direction avant et la direction arrière sur celui-ci, le châssis de support de bande ayant des rouleaux d'extrémité (20, 21) sur lesquels se déplace une bande (18) sans fin de convoyeur, des moyens (34) formant moteur d'entraînement reliés à la bande (18) de convoyeur et adaptés pour agir à un niveau de vitesse tel que le matériau quittant la bande (18) de convoyeur est projeté à partir de l'extrémité avant du convoyeur, et un convoyeur de service (15) pouvant agir de manière séparée pour charger du matériau sur la bande de convoyeur au niveau d'un emplacement situé autour de l'axe à peu près vertical.

2. Convoyeur de chargement selon la revendication 1, dans lequel les moyens (34) formant moteur d'entraînement sont adaptés pour entraîner la bande (18) de convoyeur pour qu'elle atteigne une vitesse d'au moins quatre mètres par seconde.

3. Convoyeur de chargement selon la revendication 1, dans lequel les moyens (34) formant moteur d'entraînement sont adaptes pour entraîner la bande (18) de convoyeur au niveau d'une vélocité suffisamment grande pour qu'un sac de 100 kg de blé ayant une longueur de sac donnée et une épaisseur de sac donnée, transporté par le convoyeur, soit projeté à partir de l'extrémité avant du convoyeur avec une vélocité vers l'avant telle qu'après s'être déplacé vers l'avant de deux longueurs de sac à partir de l'extrémité avant du convoyeur, il ne tombe pas sur plus de deux épaisseurs de sac.

4. Convoyeur de chargement selon l'une quelconque des revendications 1 à 3, qui comporte des moyens (22 à 27) pour commander de manière rapide la vitesse des moyens (34) formant moteur et par conséquent la vitesse de la bande (18) de convoyeur.

5. Convoyeur de chargement selon l'une quelconque des revendications 1 à 3, qui comporte des moyens de commande (22 à 27) situés au niveau de l'extrémité avant du convoyeur (18) de chargement efficaces pour arrêter l'entraînement de la bande de convoyeur à partir d'un contact séparé.

6. Convoyeur de chargement selon l'une quelconque des revendications 1 à 5, dans lequel la base est constituée d'un châssis qui comporte des pattes latérales (9 à 12) supportant une plate-forme de commande laissant ainsi une zone d'accès située sous cette dernière destinée à pouvoir être traversée par la partie supérieure d'un plateau de véhicule à moteur.

7. Procédé de chargement d'un matériau à l'intérieur d'un conteneur utilisant un convoyeur de chargement selon la revendication 1, caractérisé en ce qu'on dépose le matériau sur la bande (18) de convoyeur à proximité dudit axe vertical (7) et on accélère le matériau situé sur la bande sans fin (18) de convoyeur pour augmenter la vitesse du matériau de telle manière que le matériau soit projeté à partir de l'extrémité avant jusque dans le conteneur.

8. Procédé selon la revendication 7, dans lequel le matériau est un sac de blé et la composante verticale de la trajectoire est telle que le sac après s'être déplacé sur deux longueurs de sac vers l'avant de l'extrémité avant du convoyeur ne tombe pas sur plus de deux épaisseurs de sac.

9. Procédé selon la revendication 7 ou 8, dans lequel la bande sans fin (18) de convoyeur se déplace avec une vitesse nettement plus grande que la vitesse du convoyeur de service (15) déposant le matériau sur la bande sans fin (18) de convoyeur.
